# EUROPEAN PATENT SPECIFICATION

(11) **EP 3 298 850 B1**
(45) Date of publication and mention of the grant of the patent: **10.10.2018**
(21) Application number: 15729957.9
(22) Date of filing: 20.05.2015
(51) Int. Cl.: H04W 74/08, H04W 84/12

(54) **CONTROLLING ACCESS TO A SHARED WIRELESS MEDIUM**
STEUERUNG DES ZUGRIFFS AUF EIN GEMEINSAM GENUTZTES, DRAHTLOSES MEDIUM
COMMANDE D'ACCÈS À UN SUPPORT SANS FIL PARTAGÉ

(43) Date of publication of application: 28.03.2018
(73) Proprietor: Telefonaktiebolaget LM Ericsson (PUBL), 164 83 Stockholm (SE)
(72) Inventor: WANG, Yu, SE-169 74 Solna (SE); WIKSTRÖM, Gustav, SE- 187 30 Täby (SE); SÖDER, Johan, SE-118 60 Stockholm (SE); TAYAMON, Soma, SE-113 48 Stockholm (SE); MESTANOV, Filip, SE-191 49 Sollentuna (SE)
(74) Representative: Ericsson
(86) International application number: PCT/SE2015/050567
(87) International publication number: WO 2016/186540

(56) References cited:
- WO-A1-2009/157892
- US-A1- 2008 299 962
- US-A1- 2015 078 299
- RAJU KUMAR ET AL: "Network Coding aware Rate Selection in multi-rate IEEE 802.11", NETWORK PROTOCOLS (ICNP), 2010 18TH IEEE INTERNATIONAL CONFERENCE ON, IEEE, 5 October 2010 (2010-10-05), pages 92-102, XP031864718, DOI: 10.1109/ICNP.2010.5762758 ISBN: 978-1-4244-8644-1

## Description

### TECHNICAL FIELD

The proposed technology generally relates to wireless communication systems and medium access control, and more specifically to a method of controlling access to a shared wireless medium and a corresponding arrangement and a communication unit comprising such an arrangement, as well as a corresponding computer program, computer program product and carrier of such a computer program, and an apparatus for controlling access to a shared wireless medium.

### BACKGROUND

In general, medium access is of outmost importance for the operation and performance of communication networks.

A contention-based protocol is a communication protocol for medium access and for operating communication equipment that allows many users to use the same transmission medium such as a radio medium with little or no pre-coordination.

Listen Before Talk, LBT, or sometimes called Listen Before Transmit is an example of a contention-based procedure for medium access used in radio communications whereby a radio transmitter first senses its radio environment, i.e. a radio medium or channel, before it starts a transmission. Sometimes Listen Before Talk is referred to as Sense Before Transmit. The LBT operating procedure in IEEE 820.11 for Wireless Local Area Networks, WLANs, is one of the most well-known contention-based protocols.

For example, Carrier Sensing Multiple Access, CSMA, is a Medium Access Control, MAC, protocol in which a node verifies the absence of other traffic before transmitting on a shared transmission medium, such as an electrical bus, or a band of the electromagnetic spectrum.

Carrier Sensing means that a transmitter uses feedback from a receiver to determine whether another transmission is in progress before initiating a transmission. That is, the transmitter tries to detect the presence of a transmission or carrier wave from another station before attempting to transmit. If a transmission/carrier is sensed, the station waits for the transmission in progress to finish before initiating its own transmission. In other words, CSMA is also based on LBT. Multiple access means that multiple stations send and/or receive on the medium.

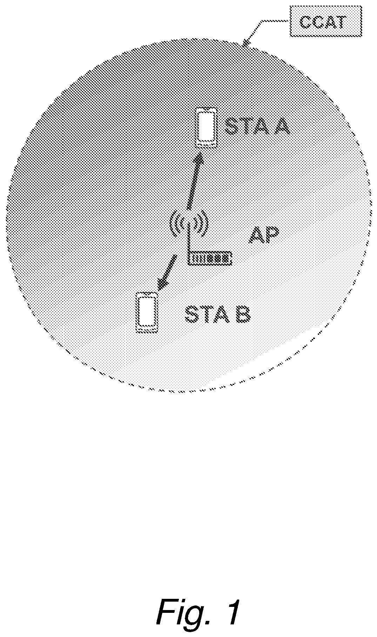

FIG. 1 is a schematic diagram illustrating an example of a wireless network employing carrier sensing with a so-called Clear Channel Assessment Threshold, CCAT. Each access point, AP, normally has a CCAT threshold and a corresponding sensing area. The CCAT is used by the AP when performing carrier sensing for transmissions to any of the portable terminals, commonly referred to as stations, STAs, associated to the AP. Similarly, each STA normally also has a CCAT for carrier sensing for transmissions to the AP.

Wireless networks using carrier sensing as a basis for medium access however typically suffer from low spectral efficiency and/or low spatial reuse in dense deployments. This is due to the fact that stations, STAs, and access points, APs, must back-off, from accessing the wireless medium if they sense that the medium is busy. To increase the spatial reuse, the medium sensing thresholds may be tuned to be more aggressive. However, this may lead to high interference situations, leading to reduced system performance and impaired user experience.

US 2015/078299 A1 relates to wireless communications and deferral of a transmission based on Basic Service Set ID (BSSID) information. A deferral-related parameter is obtained from a packet transmitted on a shared access medium and it is then decided whether to defer transmission on the shared access medium based, at least in part, on the deferral-related parameter.

### SUMMARY

According to the present invention, a method as set forth in claim 1 and an arrangement as set forth in claim 8 are provided. Embodiments of the invention are claimed in the dependent claims. It is an object to provide an improved mechanism for controlling access to a shared wireless medium in a wireless communication system operating based on a contention-based protocol for medium access.
In particular it is desirable to increase the spatial reuse in such a system.
These and other objects are met by at least one embodiment of the proposed technology.
According to a first aspect, there is provided a method of controlling access to a shared wireless medium in a wireless communication system operating based on a contention-based protocol for medium access. The method comprises deciding, for a first communication unit intending to use the shared wireless medium for a transmission to a second communication unit, and based on a representation of robustness of a transmission on the shared wireless medium between a third communication unit and a fourth communication unit, whether concurrent use of the shared wireless medium by the first communication unit is allowed.

According to a second aspect, there is provided an arrangement configured to control access to a shared wireless medium in a wireless communication system operating based on a contention-based protocol for medium access. The arrangement is configured to decide, for a first communication unit intending to use the shared wireless medium for a transmission to a second communication unit, and based on a representation of robustness of a transmission on the shared wireless medium between a third communication unit and a fourth communication unit, whether concurrent use of the shared wireless medium by the first communication unit is allowed.

According to a third aspect, there is provided a communication unit comprising an arrangement of the second aspect.

By way of example, the communication unit may be a network node such as an access point, or a wireless communication device such as a terminal station.

According to a fourth aspect, there is provided a computer program for controlling, when executed by at least one processor, access to a shared wireless medium in a wireless communication system operating based on a contention-based protocol for medium access. The computer program comprises instructions, which when executed, cause the at least one processor to decide, for a first communication unit intending to use the shared wireless medium for a transmission to a second communication unit, and based on a representation of robustness of a transmission on the shared wireless medium between a third communication unit and a fourth communication unit, whether concurrent use of the shared wireless medium by the first communication unit is allowed.

According to a fifth aspect, there is provided a computer-program product comprising a computer-readable medium having stored thereon a computer program of the fourth aspect.

According to a sixth aspect, there is provided a carrier comprising the computer program of the fourth aspect, wherein the carrier is one of an electronic signal, an optical signal, an electromagnetic signal, a magnetic signal, an electric signal, a radio signal, a microwave signal, or a computer-readable storage medium.

According to a seventh aspect, there is provided an apparatus for controlling access to a shared wireless medium in a wireless communication system operating based on a contention-based protocol for medium access. The apparatus comprises a decision module for deciding, for a first communication unit intending to use the shared wireless medium for a transmission to a second communication unit, and based on a representation of robustness of a transmission on the shared wireless medium between a third communication unit and a fourth communication unit, whether concurrent use of the shared wireless medium by the first communication unit is allowed.

According to an eighth aspect, there is provided a system configured to control access to a shared wireless medium in a wireless communication system operating based on a contention-based protocol for medium access. Basically, the system is configured to decide, based on a representation of robustness of an ongoing transmission on the shared wireless medium, whether concurrent use of the shared wireless medium is allowed.

The proposed technology opens up for the possibility of more simultaneous transmissions, thus increasing the spatial reuse and improving system capacity in contention-based wireless communication systems without significantly degrading the performance of on-going transmission(s).

Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
FIG. 1 is a schematic diagram illustrating an example of a wireless network employing carrier sensing with a common Clear Channel Assessment Threshold, CCAT.
FIG. 2 is a schematic flow diagram illustrating an example of a method of controlling access to a shared wireless medium in a wireless communication system operating based on a contention-based protocol for medium access according to an embodiment.
FIG. 3 is a schematic diagram illustrating an example of a communication scenario in which a medium access decision is to be taken for a first communication unit intending to use the shared medium for a transmission to a second communication unit with consideration to a representation of the robustness of a transmission on the shared medium between a third communication unit and fourth communication unit according to an embodiment.
FIG. 4A is a schematic diagram illustrating an example of a communication scenario in which a medium access decision is to be taken with consideration to a representation of robustness that is based on information of the Modulation and Coding Scheme, MCS, used for the transmission between a third communication unit and fourth communication unit according to an embodiment.
FIG. 4B is a schematic diagram illustrating an example of a communication scenario in which a medium access decision is to be taken with consideration to a representation of robustness that is based on information of channel quality feedback used for configuration of the transmission between a third communication unit and fourth communication unit according to another embodiment.
FIG. 5 is a schematic diagram illustrating an example of the Signal-To-Interference- and-Noise Ratio, SINR, variation in the presence of dynamic interference in a WLAN environment.
FIG. 6 is a schematic diagram illustrating an example of a mapping of SINR to spectral efficiency.
FIG. 7 is a schematic diagram illustrating a non-limiting example of a method for controlling access to a shared wireless medium according to a particular embodiment.
FIG. 8 is a schematic diagram illustrating a non-limiting example of a method for controlling access to a shared wireless medium according to another particular embodiment.
FIG. 9 is a schematic block diagram illustrating an example of an arrangement configured to control access to a shared wireless medium according to an embodiment.
FIG. 10 is a schematic diagram illustrating an example of a communication unit comprising an arrangement of FIG. 9.
FIG. 11 is a schematic diagram illustrating an example of a computer implementation according to an embodiment.
FIG. 12 is a schematic diagram illustrating an example of an apparatus for controlling access to a shared wireless medium according to an embodiment.

### DETAILED DESCRIPTION

Throughout the drawings, the same reference designations are used for similar or corresponding elements.

As used herein, the non-limiting term "network node" may refer to an access point or similar radio network node including also access controllers and the like.

As used herein, the non-limiting terms "wireless communication device" and "wireless device" may refer to a terminal or station, STA, User Equipment, UE, a mobile phone, a cellular phone, a Personal Digital Assistant, PDA, equipped with radio communication capabilities, a smart phone, a laptop or Personal Computer, PC, equipped with an internal or external mobile broadband modem, a tablet PC with radio communication capabilities, a target device, a device to device UE, a machine type UE or UE capable of machine to machine communication, iPad, customer premises equipment, CPE, laptop embedded equipment, LEE, laptop mounted equipment, LME, USB dongle, a portable electronic radio communication device, a sensor device equipped with radio communication capabilities or the like. In particular, the term "wireless device" should be interpreted as a non-limiting term comprising any type of wireless device communicating with a radio network node in a wireless communication system or any device equipped with radio circuitry for wireless communication according to any relevant standard for wireless communication.

In the following, the general non-limiting term "communication unit" includes network nodes and/or associated wireless devices.

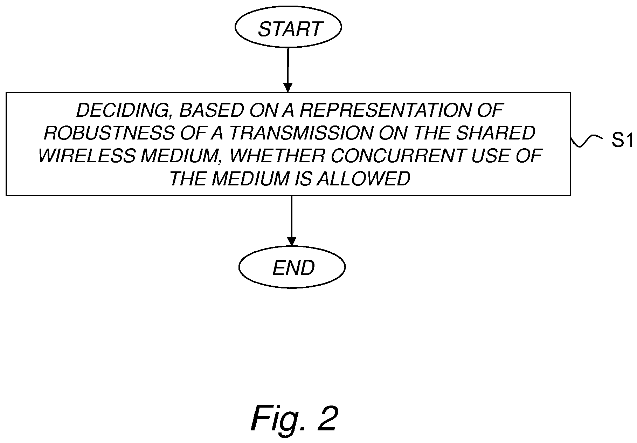

FIG. 2 is a schematic flow diagram illustrating an example of a method of controlling access to a shared wireless medium in a wireless communication system operating based on a contention-based protocol for medium access according to an embodiment.

Basically, the method comprises deciding, in step S1, for a first communication unit intending to use the shared wireless medium for a transmission to a second communication unit, and based on a representation of robustness of a transmission on the shared wireless medium between a third communication unit and a fourth communication unit, whether concurrent use of the shared wireless medium by the first communication unit is allowed.

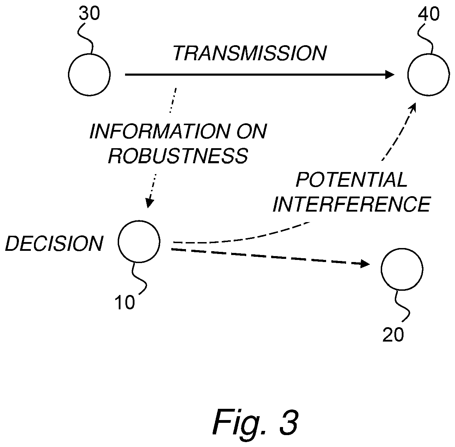

With reference to the schematic diagram of FIG. 3, an example of a communication scenario will now be described. Basically, a medium access decision is to be taken for a first communication unit 10 intending to use the shared medium for a transmission to a second communication unit 20. In the medium access decision, which is preferably performed by the first communication unit 10, consideration is taken to a representation of the robustness of a transmission on the shared medium between a third communication unit 30 and a fourth communication unit 40. For example, the information on robustness may be overheard from the on-going transmission, as will be exemplified later on.

In this particular example, information representative of the robustness of an on-going transmission between the third communication unit 30 and the fourth communication unit 40 is used for assessing whether the on-going transmission is sufficiently robust to handle the interference of a potential transmission from the first communication unit 10 to the second communication unit 20. In particular, the considered transmission for which robustness is evaluated is typically a transmission from the third communication unit 30 to the fourth communication unit 40.

This opens up for the possibility of more simultaneous transmissions, thus increasing the spatial reuse and improving system capacity in contention-based wireless communication systems without significantly degrading the performance of on-going transmission(s).

For example, the step of deciding whether concurrent use of the shared wireless medium by the first communication unit is allowed is based on determining whether the representation of robustness of the transmission is equal to or greater than a threshold during a specified period of time and/or during a specified number of transmission instances.

In this particular example, concurrent use of the shared wireless medium may be allowed if the representation of robustness is equal to or greater than the threshold during the specified period of time and/or during the specified number of transmission instances.

By way of example, the step of deciding may be based on a representation of robustness of an overheard transmission on the shared wireless medium between the third communication unit and the fourth communication unit. The representation of robustness of the transmission on the shared wireless medium between the third communication unit and the fourth communication unit may be determined by the first communication unit.

For example, the representation of robustness of the transmission between the third communication unit 30 and the fourth communication unit 40 may be determined based on detecting information in radio signaling overheard from the transmission between the third communication unit and the fourth communication unit.

In the particular example of FIG. 3, the first communication unit 10 detects information in overheard radio signaling and determines a measure or similar representation of robustness to be able to take a better medium access decision based on robustness of the on-going transmission.

In other words, for this particular example, the proposed technology may be regarded as a procedure for controlling access to a shared wireless medium based on:
- determining, for enabling a medium access decision for a first communication unit intending to use the shared wireless medium for a transmission to a second communication unit, a measure or similar representation of robustness of a transmission between a third communication unit and a fourth communication unit, and
- deciding, for the first communication unit, whether concurrent use of the shared wireless medium by the first communication unit is allowed based on the measure or representation of robustness.

In general, the representation of robustness may be based on various types of information. For example, the representation of robustness may be based on information of the Modulation and Coding Scheme, MCS, used for the transmission between the third communication unit and the fourth communication unit; especially the MCS used for a transmission from the third communication unit to the fourth communication unit.

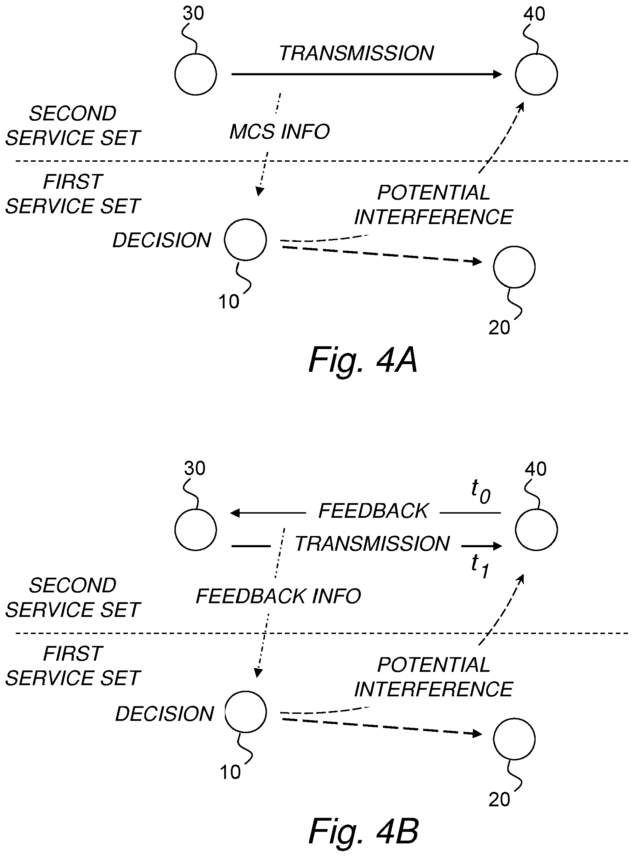

FIG. 4A is a schematic diagram illustrating an example of a communication scenario in which a medium access decision is to be taken with consideration to a representation of robustness that is based on information of the Modulation and Coding Scheme, MCS, used for the transmission between a third communication unit and fourth communication unit according to an embodiment.

In a particular example, the step of deciding whether concurrent use of the shared wireless medium by the first communication unit is allowed comprises the step of determining whether the MCS used for the transmission between the third communication unit and the fourth communication unit is equal to or greater than a MCS threshold during a specified period of time and/or during a specified number of transmission instances.

As an example, the MCS threshold may correspond to the maximum MCS usable for the transmission between the third communication unit and the fourth communication unit. The maximum usable MCS may e.g. be defined by system configuration and device capability.

Alternatively, or as a complement, the representation of robustness may be based on information of channel quality feedback used for configuration of the transmission between the third communication unit and the fourth communication unit; especially channel quality feedback used for configuration of a transmission from the third communication unit to the fourth communication unit.

FIG. 4B is a schematic diagram illustrating an example of a communication scenario in which a medium access decision is to be taken with consideration to a representation of robustness that is based on information of channel quality feedback used for configuration of the transmission between a third communication unit and fourth communication unit according to another embodiment.

If the system allows or uses feedback on channel quality at a time instance to for use when determining the characteristics of a transmission between the third unit 30 and the fourth unit 40 at a subsequent time instance t₁, information representative of the channel quality feedback such as a Channel Quality Indicator, CQI, may be overheard or otherwise obtained by the first communication unit 10 and used as a basis for a medium access decision.

By way of example, the first communication unit 10 and the second communication unit 20 may belong to a first service set, and the third communication unit 30 and the fourth communication unit 40 may belong to a second, different service set.

The first service set and the second service set may belong to the same or different Wireless Local Area Networks, WLANs.

A service set is normally considered as a set of communication units or devices associated with a wireless network, and especially a WLAN type network. In particular, a Basic Service Set, BSS, provides the basic building block of a WLAN such as 802.11 type wireless network. In infrastructure mode, an access point together with associated stations, STAs, is called a BSS. Alternatively, it is possible to set up an ad hoc network of client stations without a controlling access point, the result is normally called and Independent Basic Service Set, IBSS. An Extended Service Set, ESS, is a set of two or more interconnected BSSs that share the same Service Set Identification, SSID.

In a particular example of implementation, the transmission between the third communication unit 30 and the fourth communication unit 40 may be sensed and a link associated with the transmission between the third communication unit and the fourth communication unit identified. The link may be added to an access-deferred list if the representation of robustness is below a threshold, and the link is removed from the access-deferred list after expiry of a timer. For example, concurrent use of the shared wireless medium by the first communication unit is allowed if the representation of robustness is equal to or greater than the threshold and the corresponding link is not present in the access-deferred list.

As already indicated, the method may be performed by the first communication unit. For example, the first communication unit may be an access point or a wireless communication device.

The proposed technology may thus be applied on the network side and/or the terminal side.

The proposed technology may be used separately, or combined and/or integrated with any conventional mechanism involving normal carrier sensing thresholds.

For a better understanding of the proposed technology, it may be useful with a brief overview and analysis with reference to the particular non-limiting context of a Wireless Local Area Network, WLAN.

The WLAN technology is a general technology for local wireless communications. As the name implies Wireless Local Area Network, WLAN, technology offers a basis for wireless communications within a local area coverage. The WLAN technology includes industry-specific solutions as well as proprietary protocols, although most commercial applications are based on well-accepted standards such as the various versions of IEEE 802.11, also popularly referred to as Wi-Fi.

WLAN is standardized in the IEEE 802.11 specifications such as *IEEE Standard for Information technology-Tele-communications and information exchange between systems. Local and metropolitan area networks-Specific requirements. Part 11: Wireless LAN Medium Access Control (MAC) and Physical Layer (PHY) Specifications).* WLAN systems following the 802.11 MAC specifications operate based on distributed medium or channel access, meaning that each node in the network has more or less equal probability of accessing the medium.

WLAN or Wi-Fi currently mainly operates on the 2.4 GHz or the 5 GHz band. The IEEE 802.11 specifications regulate the access points' or wireless terminals' physical layer, MAC layer and other aspects to secure compatibility and inter-operability between access points, also referred to as APs, and wireless devices or terminals, also referred to as STAs. Wi-Fi is generally operated in unlicensed bands, and as such, communication over Wi-Fi may be subject to interference sources from any number of both known and unknown devices. Wi-Fi is commonly used as wireless extensions to fixed broadband access, e.g., in domestic environments and hotspots, like airports, train stations and restaurants.

The WLAN technology relies on Carrier Sensing Multiple Access with Collision Avoidance, CSMA/CA, in order to effectively and fairly share the wireless medium among different WLAN entities and even different Radio Access Technologies, RATs. CSMA/CA applied by the WLAN system demands that every device that wishes to send data senses the common communication channel or medium before carrying out a transmission in order to avoid duplicate transmissions that usually would result in loss of data and need of retransmissions. In order for a device to deem the channel busy, it has to detect a transmission, the received signal strength level of which surpasses a pre-determined threshold, referred to as a CCAT threshold, as previously described in connection with FIG. 1.

With static CCAT, a node may refrain from accessing the medium since it is exposed to concurrent transmissions in neighboring Basic Serving Set, BSSs, although simultaneous or concurrent communication would be possible. This limits the performance of current systems, especially as the CCA threshold used today is very low, -82 dBm. If STAs and APs could dynamically adapt their carrier sensing threshold then the amount of concurrent transmissions in the system may be increased without increasing the probability of collisions within the BSS. This would mean an increase in spectral efficiency of the system.

The Modulation and Coding Scheme, MCS, index is an index describing the modulation type, code rate and number of streams used for a transmission. The higher the MCS the more sensitive the transmission is to interference, but the transmission will carry a higher amount of data. The MCS is selected by a process commonly referred to as Rate Adaptation, RA, sometimes also called Link Adaptation, LA. The target of RA/LA is to transmit with the highest MCS given certain transmission error rate constrain. An RA/LA algorithm usually relies on historical reception successful rate, feedback from receivers or both for the rate adjustment.

Since a fixed low CCAT is usually too conservative in terms of spatial reuse, a number of algorithms have been proposed to increase spatial reuse in WLAN. While some algorithms make CCAT adaptive to radio conditions, others determine if the channel is busy based on analyzing each overheard transmission instead of relying on a common CCAT. Since more interference is introduced to the system with more number of simultaneous transmissions, the principle of these algorithms is to trade spatial reuse with reception quality.

Rate adaptation is a critical component to achieve the higher overall system throughput from the tradeoff. In general, rate adaptation works well in stable radio environments, e.g. when signal-to-interference-plus-noise ratio, SINR, changes slowly at the receiver. In dynamic environments, fast channel feedback is usually required for the rate adaptation to track channel condition variation.

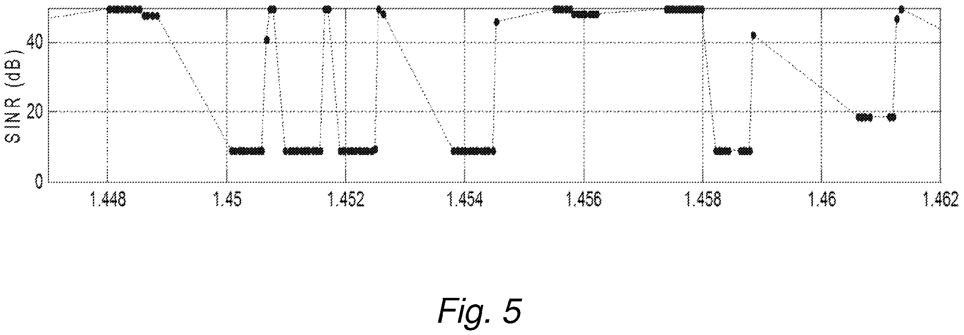

In WLAN systems, rate adaptation typically utilizes reception statistics for the MCS adjustment. However, given the contention based channel access in WLAN an interference transmission may be active only for a very short period, e.g. one or two packet durations, followed by a short silent period due to channel contention. In this case, the SINR at the receiver may vary significantly between packet transmissions, and rate adaptation is not fast enough to adapt to the fast change. One example of such SINR temporal variation in the presence of dynamic interference is given in FIG. 5. Retransmission rate may increase due to the slow link adaptation and result in system performance degradation.

It is desirable to increase spatial reuse without degrading link performance of other ongoing transmissions.

In a particular example, the radio device or similar communication unit identifies the robustness of an ongoing transmission in a neighbor BSS, e.g. by tracking the MCS of the transmission. For example, the device may consider the radio channel as available if the highest MCS is used for the ongoing transmission during a given time period. Otherwise, the channel is considered as busy and the device defers the transmission to avoid causing harmful interference to the ongoing transmission.

An advantage is improved system capacity of a carrier sensing based system. This capacity improvement is achieved by increasing spatial reuse and meanwhile limiting interference level introduced to the system. In a sense, this may be regarded as a distributed solution without coordination requirements.

The proposed technology suggests a way to increase spatial reuse by allowing more simultaneous transmissions in a carrier sensing based network. Meanwhile, the method limits the interference from a new transmission to ongoing transmissions.

In a particular example, the contention-based system is a WLAN system and the considered communication unit may be either an AP or a STA.

As previously mentioned, more aggressive channel access in a WLAN network may introduce dynamic interference which is difficult to be handled by rate adaptation, RA, algorithms. The consequence is high retransmission rate and degraded system performance and user experience.

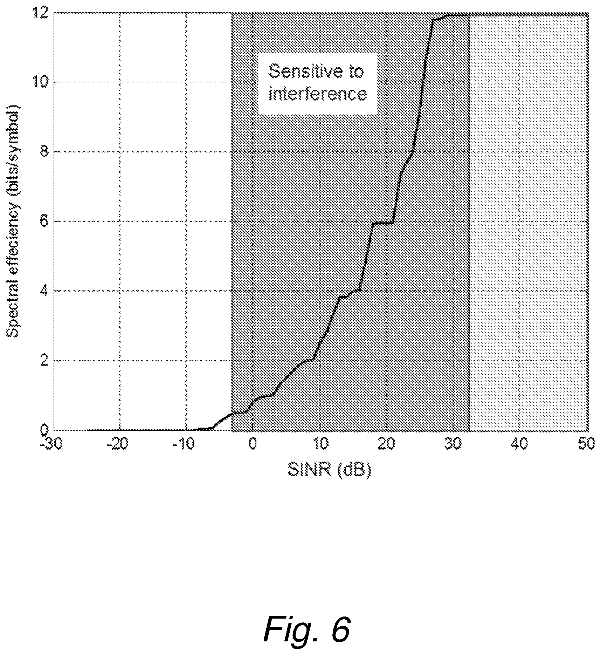

A given SINR can support a certain MCS which can be mapped to spectral efficiency as shown in FIG. 6. When the SINR is above a certain threshold, e.g. 30 dB in the example, the highest MCS can be achieved. Therefore, if additional interference caused by a new transmission is relatively small and the SINR at a receiver is always above the threshold, the RA/LA procedure does not have to respond to the fast changing SINR and the highest MCS may always be selected.

The inventors have recognized that it is possible to identify the scenario or circumstances described above, and allow simultaneous transmission in such scenarios.

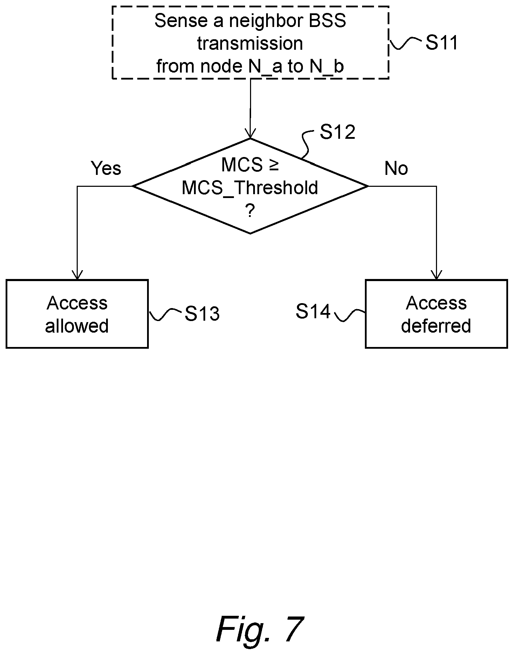

By way of example, as illustrated in FIG. 7 for the particular case of MCS-based robustness information, a neighbor BSS transmission from node N_a to node N_b is sensed by node S in step S11, and the MCS is detected and compared to a threshold MCS_Threshold in step S12. If the detected MCS is greater than or equal to the threshold (Yes), access to the shared medium is allowed, as indicated in step S13. If the detected MCS is below the threshold (No), access to the shared medium is deferred, as indicated in step S14.

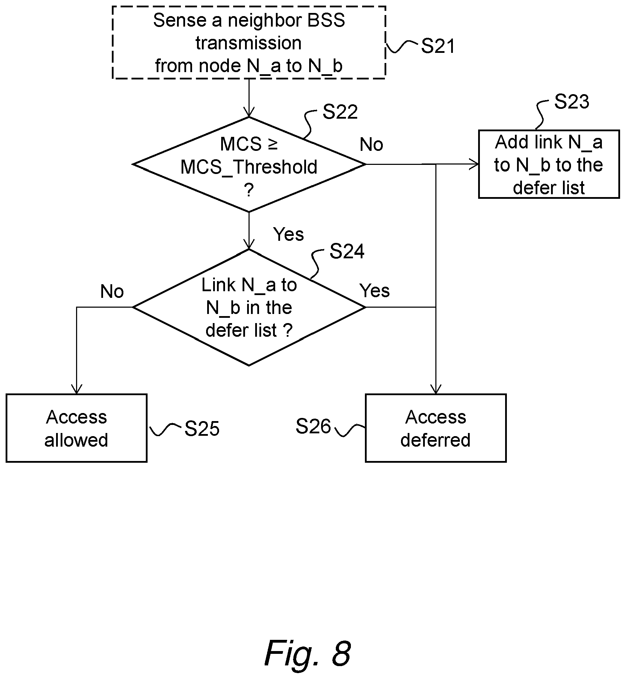

In another example embodiment, as illustrated in FIG. 8, a neighbor BSS transmission from node N_a to node N_b is sensed by node S in step S21, and the MCS is detected and compared to a threshold MCS_Threshold in step S22.

Information such as the MCS and/or receiver/transmitter addresses or identifiers may be extracted from the overheard radio signaling of the ongoing transmission. For example, the MCS can be extracted from a field of WLAN MAC header.

If the MCS does not equal MCS_Highest (No) which is the highest MCS of the system, the channel is considered as unavailable. The MCS_Highest is system configuration and device capability dependent. For example, in 802.11ac, the MCS_Highest = 19 with 2 streams and MCS_Highest = 29 with 3 streams. Neighbor BSS system configurations may be read from beacons of the neighbor BSS.

The link from N_a to N_b may be registered in a defer list, as indicated in step S23. A timer may be associated to each link in the defer list so that a link will be removed from the defer list after a predefined period within which no new registration of the link is received. If a link is in the defer list, it implies that the link has been using a MCS less than the MCS_Highest at least once within the period specified by the timer. It may indicate that the link is still sensitive to interference. The defer list may be disabled by setting the timer to zero.

In another embodiment, more aggressive spatial reuse may be achieved by loosening MCS checking criteria, e.g. to MCS ≥ MCS_threshold. In this case, the node S only defer for the transmission with low MCS. A low MCS transmission may be more costly as it may take longer time due to the lower physical rate and should be protected.

If the MCS equals MCS_Highest, or MCS ≥ MCS_threshold (Yes), and the link N_a to N_b is not in the defer list, as per the outcome (No) of the check in step S24, the channel is considered as free and access is allowed, as indicated in step S25. Otherwise, the channel is considered as unavailable during the period of the transmission from N_a to N_b and access will be deferred, as indicated in step S26.

Another possibility is to extend the range of MCS indices above MCSₘₐₓ, and let the indices higher than MCSₘₐₓ indicate the same modulation and coding as for MCSₘₐₓ. These extended indices can then be used to also indicate how robust the transmission is, e.g. so that the index MCSₘₐₓ₊ₖ, k=0,1,2,..., would indicate that the channel has a SINR margin of k*SINR_step [dB] above the SINR requirement for MCSₘₐₓ. Here, SINR_step is the selected granularity, e.g. 5 dB. In this way, a node overhearing a transmission between two other nodes, knows how robust the ongoing transmission is, and may choose to transmit when the detected MCS index is higher or equal to a threshold MCS, MCSrobust ≥ MCSmax.

Reference [1] relates to a method for minor modifications to the Distributed Coordination Function, DCF, channel access mechanism in order to enable a greater number of concurrent communications in a unit area in compliance with the current protocol design. The method comprises equipping nodes with wider neighborhood information than what is obtained with IEEE 802.11, and with a device calibration that equips the device with the knowledge of its performance in the presence of interference. The method is based on extracting the Received Signal Strength Indicator, RSSI, from neighbor transmissions.

Reference [2] relates to an extended range preamble for transmission between extended range 802.11n devices. The extended range preamble consists of a high-throughput signal field, in which a modulation coding scheme rate and payload length are specified by the transmitting device. The modulation and coding scheme is used for calculating a duration to defer access, and the purpose of using this information is to avoid concurrent transmission, not to enable concurrent transmission.

Reference [3] relates to a method for spatial frequency reuse and takes location information and required SIR as input parameters to increase spatial reuse.

It will be appreciated that the methods and devices described herein can be combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits, ASICs.

Alternatively, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors, DSPs, one or more Central Processing Units, CPUs, video acceleration hardware, and/or any suitable programmable logic circuitry such as one or more Field Programmable Gate Arrays, FPGAs, or one or more Programmable Logic Controllers, PLCs.

It should also be understood that it may be possible to re-use the general processing capabilities of any conventional device or unit in which the proposed technology is implemented. It may also be possible to re-use existing software, e.g. by reprogramming of the existing software or by adding new software components.

The proposed technology also provides an arrangement configured to control access to a shared wireless medium in a wireless communication system operating based on a contention-based protocol for medium access. The arrangement is configured to decide, for a first communication unit intending to use the shared wireless medium for a transmission to a second communication unit, and based on a representation of robustness of a transmission on the shared wireless medium between a third communication unit and a fourth communication unit, whether concurrent use of the shared wireless medium by the first communication unit is allowed.

By way of example, the arrangement is configured to decide whether concurrent use of the shared wireless medium by the first communication unit is allowed based on determining whether the representation of robustness of the transmission is equal to or greater than a threshold during a specified period of time and/or during a specified number of transmission instances.

For example, the arrangement is configured to allow concurrent use of the shared wireless medium if the representation of robustness is equal to or greater than the threshold during the specified period of time and/or during the specified number of transmission instances.

Typically, the arrangement is configured to decide whether concurrent use of the shared wireless medium is allowed based on a representation of robustness of an overheard transmission on the shared wireless medium between the third communication unit and the fourth communication unit.

Optionally, the arrangement is also configured to determine the representation of robustness of the transmission on the shared wireless medium between the third communication unit and the fourth communication unit.

For example, the arrangement may be configured to determine the representation of robustness of the transmission between the third communication unit and the fourth communication unit based on detecting information in radio signaling overheard from the transmission between the third communication unit and the fourth communication unit.

In a particular example, the arrangement is configured to decide whether concurrent use of the shared wireless medium is allowed using a representation of robustness that is based on information of the Modulation and Coding Scheme, MCS, used for the transmission between the third communication unit and the fourth communication unit.

Optionally, the arrangement may be configured to decide whether concurrent use of the shared wireless medium is allowed based on determining whether the MCS used for the transmission between the third communication unit and the fourth communication unit is equal to or greater than a MCS threshold during a specified period of time and/or during a specified number of transmission instances.

In another example, the arrangement is configured to decide whether concurrent use of the shared wireless medium is allowed using a representation of robustness that is based on information of channel quality feedback used for configuration of the transmission between the third communication unit and the fourth communication unit.

In a particular example of implementation, the arrangement may be configured to identify a link associated with the transmission between the third communication unit and the fourth communication unit. The arrangement may be configured to add the link to an access-deferred list if the representation of robustness is below a threshold, the link being removed from the access-deferred list after expiry of a timer. The arrangement may also be configured to allow concurrent use of the shared wireless medium by the first communication unit if the representation of robustness is equal to or greater than the threshold and the corresponding link is not present in the access-deferred list.

By way of example, the first communication unit and the second communication unit may belong to a first service set, and the third communication unit and the fourth communication unit may belong to a second, different service set.

The first service set and the second service set belong to the same or different Wireless Local Area Networks, WLANs.

In particular, the considered transmission for which robustness is evaluated is typically a transmission from the third communication unit to the fourth communication unit.

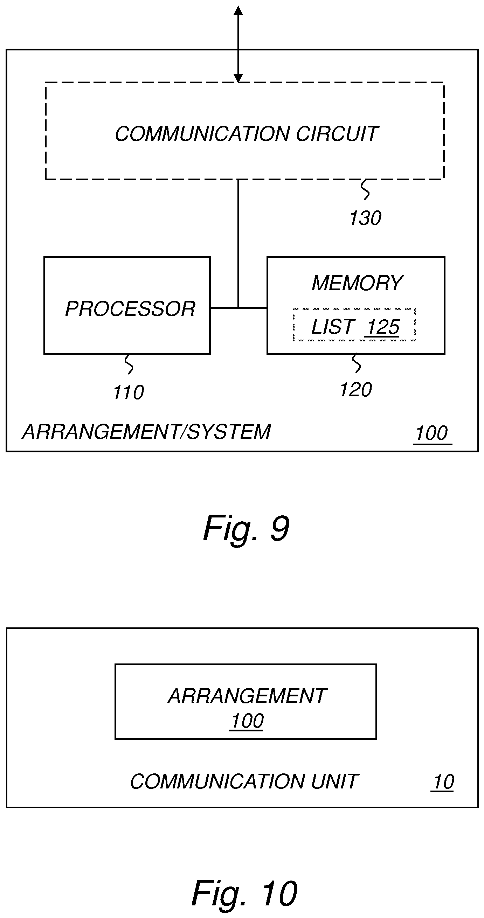

FIG. 9 is a schematic block diagram illustrating an example of an arrangement configured to control access to a shared wireless medium according to an embodiment. In this particular example, the arrangement 100 comprises a processor 110 and a memory 120, the memory comprising instructions executable by the processor, whereby the processor is operative to control access to the shared wireless medium.

Optionally, the arrangement 100 may also include a communication circuit 130. The communication circuit 130 may include functions for wired and/or wireless communication with other devices and/or network nodes in the network. In a particular example, the communication circuit may be based on radio circuitry for communication with one or more other nodes, including transmitting and/or receiving information. The communication circuit 130 may be interconnected to the processor 110 and/or memory 120.

The proposed technology provides a system configured to control access to a shared wireless medium in a wireless communication system operating based on a contention-based protocol for medium access. Basically, the system is configured to decide, based on a representation of robustness of an ongoing transmission on the shared wireless medium, whether concurrent use of the shared wireless medium is allowed.

FIG. 10 is a schematic diagram illustrating an example of a communication unit comprising an arrangement of FIG. 9. As illustrated, the arrangement 100 may be implemented in a communication unit, such as the first communication unit 10.

In other words, there is also provided a communication unit 10 comprising an arrangement 100 as described herein.

By way of example, the communication unit 10 may be a network node or a wireless communication device.

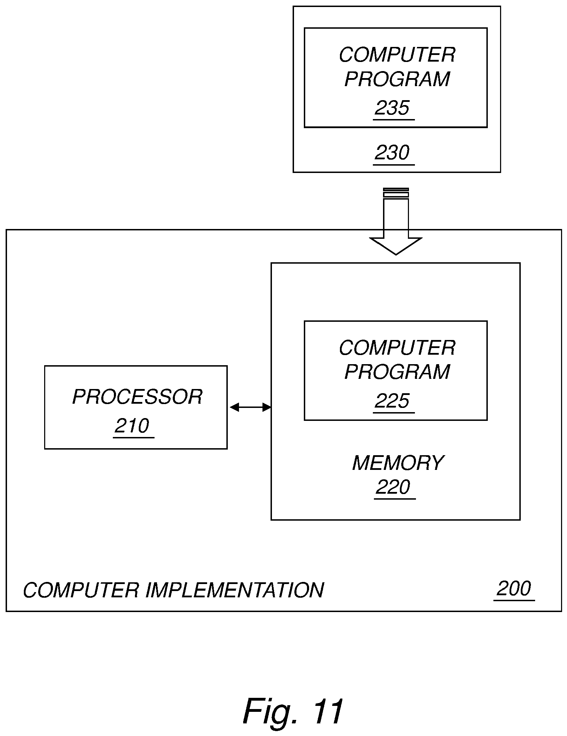

FIG. 11 is a schematic diagram illustrating an example of a computer implementation according to an embodiment.

In this particular example, at least some of the steps, functions, procedures, modules and/or blocks described herein are implemented in a computer program 225; 235, which is loaded into the memory 220 for execution by processing circuitry including one or more processors 210. The processor(s) and memory are interconnected to each other to enable normal software execution. An optional input/output device may also be interconnected to the processor(s) and/or the memory to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors is thus configured to perform, when executing the computer program, well-defined processing tasks such as those described herein.

The processing circuitry does not have to be dedicated to only execute the above-described steps, functions, procedure and/or blocks, but may also execute other tasks.

In a particular embodiment, the computer program is adapted for controlling, when executed by at least one processor, access to a shared wireless medium in a wireless communication system operating based on a contention-based protocol for medium access. The computer program 225; 235 comprises instructions, which when executed, cause the at least one processor to decide, for a first communication unit intending to use the shared wireless medium for a transmission to a second communication unit, and based on a representation of robustness of a transmission on the shared wireless medium between a third communication unit and a fourth communication unit, whether concurrent use of the shared wireless medium by the first communication unit is allowed.

In particular, the considered transmission for which robustness is evaluated is typically a transmission from the third communication unit to the fourth communication unit.

The proposed technology also provides a carrier comprising the computer program, wherein the carrier is one of an electronic signal, an optical signal, an electromagnetic signal, a magnetic signal, an electric signal, a radio signal, a microwave signal, or a computer-readable storage medium.

By way of example, the software or computer program may be realized as a computer program product, which is normally carried or stored on a computer-readable medium 220; 230, in particular a non-volatile medium. The computer-readable medium may include one or more removable or non-removable memory devices including, but not limited to a Read-Only Memory, ROM, a Random Access Memory, RAM, a Compact Disc, CD, a Digital Versatile Disc, DVD, a Blu-ray disc, a Universal Serial Bus, USB, memory, a Hard Disk Drive, HDD, storage device, a flash memory, a magnetic tape, or any other conventional memory device. The computer program may thus be loaded into the operating memory of a computer or equivalent processing device for execution by the processing circuitry thereof.

The flow diagrams presented herein may be regarded as computer flow diagrams, when performed by one or more processors. A corresponding apparatus may be defined as a group of function modules, where each step performed by the processor corresponds to a function module. In this case, the function modules are implemented as a computer program running on the processor.

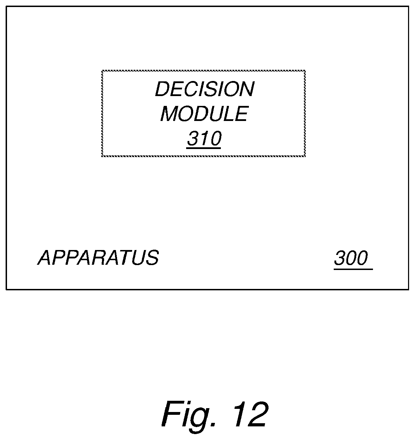

The computer program residing in memory may thus be organized as appropriate function modules configured to perform, when executed by the processor, at least part of the steps and/or tasks described herein. An example of such function modules is illustrated in FIG. 12.

FIG. 12 is a schematic diagram illustrating an example of an apparatus for controlling access to a shared wireless medium according to an embodiment. The apparatus is adapted for controlling access to a shared wireless medium in a wireless communication system operating based on a contention-based protocol for medium access. The apparatus 300 comprises a decision module 310 for deciding, for a first communication unit intending to use the shared wireless medium for a transmission to a second communication unit, and based on a representation of robustness of a transmission on the shared wireless medium between a third communication unit and a fourth communication unit, whether concurrent use of the shared wireless medium by the first communication unit is allowed.

In particular, the considered transmission for which robustness is evaluated is typically a transmission from the third communication unit to the fourth communication unit.

Alternatively it is possibly to realize the module in FIG. 12 predominantly by hardware modules, or alternatively by hardware. Particular examples include one or more suitably configured digital signal processors and other known electronic circuits, e.g. discrete logic gates interconnected to perform a specialized function, and/or Application Specific Integrated Circuits, ASICs, as previously mentioned. Other examples of usable hardware include input/output, I/O, circuitry and/or circuitry for receiving and/or sending signals. The extent of software versus hardware is purely implementation selection.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

### REFERENCES

[1] US 2014/254459
[2] US 2008/299962
[3] Design and theoretical analysis of throughput enhanced spatial reuse distributed coordination function for IEEE 802.11, by Kim et al., XP006034301, IET Communications, 1934-1947, 2009.

## Claims

1. A method of controlling access to a shared wireless medium in a wireless communication system operating based on a contention-based protocol for medium access, wherein the method comprises:
- deciding (S1), for a first communication unit (10) intending to use the shared wireless medium for a transmission to a second communication unit (20), and based on determining whether a representation of robustness of a transmission on the shared wireless medium between a third communication unit (30) and a fourth communication unit (40) is equal to or greater than a threshold during a specified number of transmission instances, whether concurrent use of the shared wireless medium by the first communication unit (10) is allowed,
wherein the representation of robustness is based on information of the Modulation and Coding Scheme, MCS, used for the transmission between the third communication unit and the fourth communication unit and/or based on information of channel quality feedback used for configuration of the transmission between the third communication unit and the fourth communication unit
wherein the transmission between the third communication unit and the fourth communication unit is sensed (S21) and a link associated with the transmission between the third communication unit and the fourth communication unit is identified, and the link is added (S23) to an access-deferred list if the representation of robustness is below a threshold (S22, No) and the link is removed from the access-deferred list after expiry of a timer, and
wherein concurrent use of the shared wireless medium by the first communication unit is allowed (S25) if the representation of robustness is equal to or greater than the threshold (S22, Yes) and the corresponding link is not present in the access-deferred list (S24, No).

2. The method of claim 1, wherein concurrent use of the shared wireless medium is allowed if the representation of robustness is equal to or greater than the threshold during the specified number of transmission instances.

3. The method of any of the claims 1 to 2, wherein the step (S1) of deciding is based on a representation of robustness of an overheard transmission on the shared wireless medium between the third communication unit and the fourth communication unit.

4. The method of any of the claims 1 to 3, wherein the representation of robustness of the transmission on the shared wireless medium between the third communication unit and the fourth communication unit is determined by the first communication unit.

5. The method of any of the claims 1 to 4, wherein the representation of robustness of the transmission between the third communication unit and the fourth communication unit is determined based on detecting information in radio signaling overheard from the transmission between the third communication unit and the fourth communication unit.

6. The method of claim 1, wherein the step (S1) of deciding whether concurrent use of the shared wireless medium by the first communication unit is allowed comprises the step (S12; S22) of determining whether the MCS used for the transmission between the third communication unit and the fourth communication unit is equal to or greater than a MCS threshold during a specified number of transmission instances.

7. The method of claim 6, wherein the MCS threshold corresponds to the maximum MCS usable for the transmission between the third communication unit and the fourth communication unit.

8. An arrangement (100; 200; 300) configured to control access to a shared wireless medium in a wireless communication system operating based on a contention-based protocol for medium access,
wherein the arrangement (100; 200; 300) is configured to decide, for a first communication unit (10) intending to use the shared wireless medium for a transmission to a second communication unit (20), and based on determining whether a representation of robustness of a transmission on the shared wireless medium between a third communication unit (30) and a fourth communication unit (40) is equal to or greater than a threshold during a specified number of transmission instances, whether concurrent use of the shared wireless medium by the first communication unit (10) is allowed,
wherein the representation of robustness is based on information of the Modulation and Coding Scheme, MCS, used for the transmission between the third communication unit and the fourth communication unit and/or based on information of channel quality feedback used for configuration of the transmission between the third communication unit and the fourth communication unit
wherein the arrangement (100; 200; 300) is configured to identify a link associated with the transmission between the third communication unit and the fourth communication unit,
wherein the arrangement is configured to add the link to an access-deferred list (125) if the representation of robustness is below a threshold, the link being removed from the access-deferred list (125) after expiry of a timer, and
wherein the arrangement is configured to allow concurrent use of the shared wireless medium by the first communication unit if the representation of robustness is equal to or greater than the threshold and the corresponding link is not present in the access-deferred list (125).

9. The arrangement of claim 8, wherein the arrangement (100; 200; 300) is configured to allow concurrent use of the shared wireless medium if the representation of robustness is equal to or greater than the threshold during the specified number of transmission instances.

10. The arrangement of any of the claims 8 to 9, wherein the arrangement (100; 200; 300) is configured to decide whether concurrent use of the shared wireless medium is allowed based on a representation of robustness of an overheard transmission on the shared wireless medium between the third communication unit and the fourth communication unit.

11. The arrangement any of the claims 8 to 10, wherein the arrangement (100; 200; 300) is configured to determine the representation of robustness of the transmission on the shared wireless medium between the third communication unit and the fourth communication unit.

12. The arrangement of any of the claims 8 to 11, wherein the arrangement (100; 200; 300) is configured to determine the representation of robustness of the transmission between the third communication unit and the fourth communication unit based on detecting information in radio signaling overheard from the transmission between the third communication unit and the fourth communication unit.

13. The arrangement of claim 8, wherein the arrangement (100; 200; 300) is configured to decide whether concurrent use of the shared wireless medium is allowed based on determining whether the MCS used for the transmission between the third communication unit and the fourth communication unit is equal to or greater than a MCS threshold during a specified number of transmission instances.

14. The arrangement of any of the claims 8 to 13, wherein the first communication unit (10) and the second communication unit (20) belong to a first service set, and the third communication unit (30) and the fourth communication unit (40) belong to a second, different service set.

15. The arrangement of claim 14, wherein the first service set and the second service set belong to the same or different Wireless Local Area Networks, WLANs.

## Patentansprüche

1. Verfahren zum Steuern von Zugriff auf ein gemeinsam genutztes drahtloses Medium in einem drahtlosen Kommunikationssystem, das auf der Basis eines kontentionsbasierten Protokolls für Mediumzugriff operiert, worin das Verfahren Folgendes umfasst:
- Entscheiden (S1), für eine erste Kommunikationseinheit (10), die beabsichtigt, das gemeinsam genutzte drahtlose Medium für eine Übertragung an eine zweite Kommunikationseinheit (20) zu verwenden, und auf dem Bestimmen basierend, ob eine Repräsentation von Robustheit einer Übertragung auf dem gemeinsam genutzten drahtlosen Medium zwischen einer dritten Kommunikationseinheit (30) und einer vierten Kommunikationseinheit (40) während einer spezifizierten Anzahl von Übertragungsinstanzen größer gleich einer Schwelle ist, ob gleichzeitige Verwendung des gemeinsam genutzten drahtlosen Mediums durch die erste Kommunikationseinheit (10) erlaubt ist,
worin die Repräsentation von Robustheit auf Information des Modulations- und Codierschemas, MCS, basiert, das für die Übertragung zwischen der dritten Kommunikationseinheit und der vierten Kommunikationseinheit verwendet wird, und/oder auf Information des Kanalqualitäts-Feedbacks basiert, das für Konfiguration der Übertragung zwischen der dritten Kommunikationseinheit und der vierten Kommunikationseinheit verwendet wird,
worin die Übertragung zwischen der dritten Kommunikationseinheit und der vierten Kommunikationseinheit abgetastet (S21) wird und eine Verbindung identifiziert wird, die mit der Übertragung zwischen der dritten Kommunikationseinheit und der vierten Kommunikationseinheit assoziiert ist, und die Verbindung einer zugriffsrückgestellten Liste hinzugefügt (S23) wird, falls die Repräsentation von Robustheit unter einer Schwelle (S22, No) liegt und die Verbindung mach Ablauf eines Timers aus der zugriffsrückgestellten Liste entfernt wird, und
worin gleichzeitige Verwendung des gemeinsam genutzten drahtlosen Mediums durch die erste Kommunikationseinheit erlaubt wird (S25), falls die Repräsentation von Robustheit größer gleich der Schwelle (S22, Yes) ist und die entsprechende Verbindung in der zugriffsrückgestellten Liste nicht vorhanden ist (S24, No).

2. Verfahren nach Anspruch 1, worin gleichzeitige Verwendung des gemeinsam genutzten drahtlosen Mediums erlaubt ist, falls die Repräsentation von Robustheit während der spezifizierten Anzahl von Übertragungsinstanzen größer gleich der Schwelle ist.

3. Verfahren nach einem der Ansprüche 1 bis 2, worin der Schritt (S1) des Entscheidens auf einer Repräsentation von Robustheit einer abgehörten Übertragung auf dem gemeinsam genutzten drahtlosen Medium zwischen der dritten Kommunikationseinheit und der vierten Kommunikationseinheit basiert.

4. Verfahren nach einem der Ansprüche 1 bis 3, worin die Repräsentation von Robustheit der Übertragung auf dem gemeinsam genutzten drahtlosen Medium zwischen der dritten Kommunikationseinheit und der vierten Kommunikationseinheit durch die erste Kommunikationseinheit bestimmt wird.

5. Verfahren nach einem der Ansprüche 1 bis 4, worin die Repräsentation von Robustheit der Übertragung zwischen der dritten Kommunikationseinheit und der vierten Kommunikationseinheit bestimmt wird auf der Basis des Detektierens von Information in Funksignalisierung, die aus der Übertragung zwischen der dritten Kommunikationseinheit und der vierten Kommunikationseinheit abgehört wird.

6. Verfahren nach Anspruch 1, worin der Schritt (S1) des Entscheidens, ob gleichzeitige Verwendung des gemeinsam genutzten drahtlosen Mediums durch die erste Kommunikationseinheit erlaubt ist, den Schritt (S12; S22) des Bestimmens umfasst, ob das MCS, das für Übertragung zwischen der dritten Kommunikationseinheit und der vierten Kommunikationseinheit verwendet wird, während einer spezifizierten Anzahl von Übertragungsinstanzen größer gleich einer MCS-Schwelle ist.

7. Verfahren nach Anspruch 6, worin die MCS-Schwelle dem maximalen MCS entspricht, das für die Übertragung zwischen der dritten Kommunikationseinheit und der vierten Kommunikationseinheit verwendbar ist.

8. Anordnung (100; 200; 300), konfiguriert zum Steuern von Zugriff auf ein gemeinsam genutztes drahtloses Medium in einem drahtlosen Kommunikationssystem, das auf der Basis eines kontentionsbasierten Protokolls für Mediumzugriff operiert,
worin die Anordnung (100; 200; 300) konfiguriert ist, für eine erste Kommunikationseinheit (10), die das Verwenden des gemeinsam genutzten drahtlosen Mediums für eine Übertragung an eine zweite Kommunikationseinheit (20) beabsichtigt, und auf der Basis des Bestimmens, ob eine Repräsentation von Robustheit einer Übertragung auf dem gemeinsam genutzten drahtlosen Medium zwischen einer dritten Kommunikationseinheit (30) und einer vierten Kommunikationseinheit (40) während einer spezifizierten Anzahl von Übertragungsinstanzen größer gleich einer Schwelle ist, zum Entscheiden, ob gleichzeitige Verwendung des gemeinsam genutzten drahtlosen Mediums durch die erste Kommunikationseinheit (10) erlaubt ist,
worin die Repräsentation von Robustheit auf Information des Modulations- und Codierschemas, MCS, basiert, das zur Übertragung zwischen der dritten Kommunikationseinheit und der vierten Kommunikationseinheit verwendet wird und/oder auf Information des Kanalqualitäts-Feedbacks basiert, das für Konfiguration der Übertragung zwischen der dritten Kommunikationseinheit und der vierten Kommunikationseinheit verwendet wird,
worin die Anordnung (100; 200; 300) dazu konfiguriert ist, eine Verbindung zu identifizieren, die mit der Übertragung zwischen der dritten Kommunikationseinheit und der vierten Kommunikationseinheit (40) assoziiert ist,
worin die Anordnung dazu konfiguriert ist, die Verbindung einer zugriffsrückgestellten Liste (125) hinzuzufügen, falls die Repräsentation von Robustheit unter einer Schwelle liegt, wobei die Verbindung von der zugriffsrückgestellten Liste nach Ablauf eines Timers entfernt wird, und
worin die Anordnung dazu konfiguriert ist, gleichzeitiges Verwenden des gemeinsam genutzten drahtlosen Mediums durch die erste Kommunikationseinheit zu erlauben, falls die Repräsentation von Robustheit größer gleich der Schwelle ist und die entsprechende Verbindung in der zugriffsrückgestellten Liste (125) nicht vorhanden ist.

9. Anordnung nach Anspruch 8, worin die Anordnung (100; 200; 300) dazu konfiguriert ist, gleichzeitiges Verwenden des gemeinsam genutzten drahtlosen Mediums zu erlauben, falls die Repräsentation von Robustheit während der spezifizierten Anzahl von Übertragungsinstanzen größer gleich der Schwelle ist.

10. Anordnung nach einem der Ansprüche 8 bis 9, worin die Anordnung (100; 200; 300) zum Entscheiden konfiguriert ist, ob gleichzeitiges Verwenden des gemeinsam genutzten drahtlosen Mediums erlaubt ist, basierend auf einer Repräsentation von Robustheit einer abgehörten Übertragung auf dem gemeinsam genutzten drahtlosen Medium zwischen der dritten Kommunikationseinheit und der vierten Kommunikationseinheit.

11. Anordnung nach einem der Ansprüche 8 bis 10, worin die Anordnung (100; 200; 300) dazu konfiguriert ist, die Repräsentation von Robustheit der Übertragung auf dem gemeinsam genutzten drahtlosen Medium zwischen der dritten Kommunikationseinheit und der vierten Kommunikationseinheit zu bestimmen.

12. Anordnung nach einem der Ansprüche 8 bis 11, worin die Anordnung (100; 200; 300) dazu konfiguriert ist, die Repräsentation von Robustheit der Übertragung zwischen der dritten Kommunikationseinheit und der vierten Kommunikationseinheit zu bestimmen, basierend auf dem Detektieren von Information in der Funksignalisierung, die aus der Übertragung zwischen der dritten Kommunikationseinheit und der vierten Kommunikationseinheit abgehört wird.

13. Anordnung nach Anspruch 8, worin die Anordnung (100; 200; 300) zum Entscheiden konfiguriert ist, ob das gleichzeitige Verwenden des gemeinsam genutzten drahtlosen Mediums erlaubt ist, basierend auf dem Bestimmen, ob das für die Übertragung zwischen der dritten Kommunikationseinheit und der vierten Kommunikationseinheit verwendete MCS während einer spezifizierten Anzahl von Übertragungsinstanzen größer gleich einer MCS-Schwelle ist.

14. Anordnung nach einem der Ansprüche 8 bis 13, worin die erste Kommunikationseinheit (10) und die zweite Kommunikationseinheit (20) zu einem ersten Dienstsatz gehören und die dritte Kommunikationseinheit (30) und die vierte Kommunikationseinheit (40) zu einem zweiten, anderen Dienstsatz gehören.

15. Anordnung nach Anspruch 14, worin der erste Dienstsatz und der zweite Dienstsatz zu denselben oder verschiedenen drahtlosen lokalen Netzen, WLANs, gehören.

## Revendications

1. Procédé de commande d'accès à un support sans fil partagé dans un système de communication sans fil fonctionnant sur la base d'un protocole à base de contention pour un accès à un support, le procédé comprenant :
- l'action de décider (S1), pour une première unité de communication (10) destinée à utiliser le support sans fil partagé pour une transmission vers une deuxième unité de communication (20) et, sur la base de l'action consistant à déterminer si une représentation de robustesse d'une transmission sur le support sans fil partagé entre une troisième unité de communication (30) et une quatrième unité de communication (40) est égale ou supérieure à un seuil pendant un nombre spécifié d'instances de transmission, si l'utilisation concomitante du support sans fil partagé par la première unité de communication (10) est autorisée,
dans lequel la représentation de robustesse est basée sur l'information du Schéma de Modulation et de Codage, MCS, utilisée pour la transmission entre la troisième unité de communication et la quatrième unité de communication et/ou basée sur l'information de retour sur la qualité de voie utilisée pour la configuration de la transmission entre la troisième unité de communication et la quatrième unité de communication,
dans lequel la transmission entre la troisième unité de communication et la quatrième unité de communication est détectée (S21), et un lien associé à la transmission entre la troisième unité de communication et la quatrième unité de communication est identifié, et le lien est ajouté (S23) à une liste d'accès différé si la représentation de robustesse est inférieure à un seul (S22, No) et le lien est retiré de la liste d'accès différé après expiration d'un délai, et
dans lequel l'utilisation concomitante du support sans fil partagé par la première unité de communication est autorisée (S25) si la représentation de robustesse est égale ou supérieure au seuil (S22, Yes) et le lien correspondant n'est pas présent dans la liste d'accès différé (S24, No).

2. Procédé selon la revendication 1, dans lequel l'utilisation concomitante du support sans fil partagé est autorisée si la représentation de robustesse est égale ou supérieure au seuil pendant le nombre spécifié d'instances de transmission.

3. Procédé selon l'une quelconque des revendications 1 à 2, dans lequel l'étape (S1) de décision est basée sur une représentation de robustesse d'une transmission entendue sur le support sans fil partagé entre la troisième unité de communication et la quatrième unité de communication.

4. Procédé selon l'une quelconque des revendications 1 à 3, dans lequel la représentation de robustesse de la transmission sur le support sans fil partagé entre la troisième unité de communication et la quatrième unité de communication est déterminée par la première unité de communication.

5. Procédé selon l'une quelconque des revendications 1 à 4, dans lequel la représentation de robustesse de la transmission entre la troisième unité de communication et la quatrième unité de communication est déterminée sur la base de la détection d'informations dans une radiosignalisation entendue à partir de la transmission entre la troisième unité de communication et la quatrième unité de communication.

6. Procédé selon la revendication 1, dans lequel l'étape (S1) consistant à décider si une utilisation concomitante du support sans fil partagé par la première unité de communication est autorisée comprend l'étape (S12 ; S22) consistant à déterminer si le MCS utilisé pour la transmission entre la troisième unité de communication et la quatrième unité de communication est égal ou supérieur à un seuil MCS pendant un nombre spécifié d'instances de transmission.

7. Procédé selon la revendication 6, dans lequel le seuil MCS correspond au MCS maximal pouvant être utilisé pour la transmission entre la troisième unité de communication et la quatrième unité de communication.

8. Agencement (100 ; 200 ; 300) configuré pour commander l'accès à un support sans fil partagé dans un système de communication sans fil fonctionnant sur la base d'un protocole à base de contention pour l'accès au support,
dans lequel l'agencement (100 ; 200 ; 300) est configuré pour décider, pour une première unité de communication (10) destinée à utiliser le support sans fil partagé pour une transmission vers une deuxième unité de communication (20) et, sur la base de l'action consistant à déterminer si une représentation de robustesse d'une transmission sur le support sans fil partagé entre une troisième unité de communication (30) et une quatrième unité de communication (40) est égale ou supérieure à un seuil pendant un nombre spécifié d'instances de transmission, si l'utilisation concomitante du support sans fil partagé par la première unité de communication (10) est autorisée,
dans lequel la représentation de robustesse est basée sur l'information du Schéma de Modulation et de Codage, MCS, utilisée pour la transmission entre la troisième unité de communication et la quatrième unité de communication et/ou basée sur l'information de retour sur la qualité de voie utilisée pour la configuration de la transmission entre la troisième unité de communication et la quatrième unité de communication,
dans lequel l'agencement (100 ; 200 ; 300) est configuré pour identifier un lien associé à la transmission entre la troisième unité de communication et la quatrième unité de communication,
dans lequel l'agencement est configuré pour ajouter le lien à une liste d'accès différé (125) si la représentation de robustesse est inférieure à un seuil, le lien étant enlevé de la liste d'accès différé (125) après l'expiration d'un délai, et
dans lequel l'agencement est configuré pour autoriser l'utilisation concomitante du support sans fil partagé par la première unité de communication si la représentation de robustesse est égale ou supérieure au seuil et le lien correspondant n'est pas présent dans la liste d'accès différé (125).

9. Agencement selon la revendication 8, dans lequel l'agencement (100 ; 200 ; 300) est configuré pour autoriser l'utilisation concomitante du support sans fil partagé si la représentation de robustesse est égale ou supérieure au seuil pendant le nombre spécifié d'instances de transmission.

10. Agencement selon l'une quelconque des revendications 8 à 9, dans lequel l'agencement (100 ; 200 ; 300) est configuré pour décider si l'utilisation concomitante du support sans fil partagé est autorisée sur la base d'une représentation de robustesse d'une transmission entendue sur le support sans fil partagé entre la troisième unité de communication et la quatrième unité de communication.

11. Agencement selon l'une quelconque des revendications 8 à 10, dans lequel l'agencement (100; 200 ; 300) est configuré pour déterminer la représentation de robustesse de la transmission sur le support sans fil partagé entre la troisième unité de communication et la quatrième unité de communication.

12. Agencement selon l'une quelconque des revendications 8 à 11, dans lequel l'agencement (100 ; 200 ; 300) est configuré pour déterminer la représentation de robustesse de la transmission entre la troisième unité de communication et la quatrième unité de communication sur la base de la détection d'informations dans une radiosignalisation entendue à partir de la transmission entre la troisième unité de communication et la quatrième unité de communication.

13. Agencement selon la revendication 8, dans lequel l'agencement (100 ; 200 ; 300) est configuré pour décider si l'utilisation concomitante du support sans fil partagé est autorisée sur la base de l'action consistant à déterminer si le MCS utilisé pour la transmission entre la troisième unité de communication et la quatrième unité de communication est égal ou supérieur à un seuil MCS pendant un nombre spécifié d'instances de transmission.

14. Agencement selon l'une quelconque des revendications 8 à 13, dans lequel la première unité de communication (10) et la deuxième unité de communication (20) appartiennent à un premier ensemble de service, et la troisième unité de communication (30) et la quatrième unité de communication (40) appartiennent à un deuxième ensemble de service différent.

15. Agencement selon la revendication 14, dans lequel le premier ensemble de service et le deuxième ensemble de service appartiennent aux mêmes réseaux locaux sans fil WLAN ou à des réseaux locaux sans fil WLAN différents.
